# EUROPÄISCHE PATENTSCHRIFT

(11) **EP 2 026 062 B1**
(45) Veröffentlichungstag und Bekanntmachung des Hinweises auf die Patenterteilung: **17.12.2014**
(21) Anmeldenummer: 07016221.9
(22) Anmeldetag: 17.08.2007
(51) Int. Cl.: G01N 27/22, G01R 27/26

(54) **Verfahren und Vorrichtung zur Bestimmung des Feuchtegehalts einer Isolierung eines Transformators**
Method and device for determining the humidity content in the insulator of a transformer
Procédé et dispositif destinés à la détermination de la teneur en humidité d'une isolation de transformateur

(43) Veröffentlichungstag der Anmeldung: 18.02.2009
(73) Patentinhaber: Omicron electronics GmbH, 6833 Klaus (AT)
(72) Erfinder: Koch, Maik, 88131 Lindau (DE)
(74) Vertreter: Banzer, Hans-Jörg

(56) Entgegenhaltungen:
- DE-A1- 10 013 001
- CIGRÉ 15.01.09: GUBANSKI, BOSS, CSÉPES, DER HOUHANESSIAN, FILIPPINI, GUUINIC, GÄFVERT, KARIUS, LAPWORTH, URBANI, WERELIUS, ZAENGL: "Dielectric response methods for diagnostics of power transformers" DEIS, IEEE ELECTRICAL INSULATION MAGAZINE, 2003, Seiten 12-18, XP002464320
- C.T. DERVOS, C.D. PARASKEVAS, P. SKAFIDAS, P. VASSILIOU: "Dielectric characterization of power transformer oils as a diagnostic life prediction method" DEIS, Bd. 21, Nr. 1, Februar 2005 (2005-02), Seiten 11-19, XP002464321
- TAPAN K. SAHA, PRITHWIRAJ PURKAIT: "Investigation of an expert system for the condition assessment of transformer insulation based on dielectric response measurements" IEEE TRANSACTIONS ON POWER DELIVERY, Bd. 19, Nr. 3, Juli 2004 (2004-07), Seiten 1127-1134, XP002464322
- WALTER S. ZAENGL: "Applications of dielectric spectroscopy in time and frequency domain for HV power equipment" DEIS, Bd. 19, Nr. 6, Dezember 2003 (2003-12), Seiten 9-22, XP002464323
- TAPAN KUMAR SAHA: "Review of time-domain polarization measurements for assessing insulation condition in aged transformers" IEEE TRANSACTIONS ON POWER DELIVERY, Bd. 18, Nr. 4, Oktober 2003 (2003-10), Seiten 1293-1301, XP002464324
- GÄFVERT, ADEEN, TAPPER, GHASEMI, JÖNSSON: "Dielectric spectroscopy in time and frequency domain applied to diagnostics of power transformers" PROC. OF THE 6TH INTL. CONF. ON PROPERTIES AND APPLICATIONS OF DIELECTRIC MATERIALS, 26. Juni 2000 (2000-06-26), Seiten 825-830, XP002464325
- Maik Koch ET AL: "Ölleitfähigkeit und Grenzflächenpolarisation am Öl-Papier-Dielektrikum", VDE Fachtagung Grenzflächen in elektrischen Isoliersystemen, 9 March 2005 (2005-03-09), XP055047345, Hanau Retrieved from the Internet: URL:http://www.uni-stuttgart.de/ieh/forsch ung/veroeffentlichungen/2005_Grenzflaechen _koch1.pdf [retrieved on 2012-12-11]
- ANDREAS KÜCHLER ET AL: 'Das dielektrische Verhalten von Öl-Papier-Isolationen unter der Wirkung von Grenzflächen-, Material- und Prüfparametern', [Online] 16 September 2005, HANAU, XP055047341 ETG Fachtagung 2005
- Andreas Küchler ET AL: "Berücksichtigung geometrischer und parasitärer Einflüsse bei der Bestimmung des Wassergehaltes in Öl-Papier-Isolationen durch dielektrische Diagnose", Fachtagung der Energietechnischen Gesellschaft (ETG), 1 January 2004 (2004-01-01), XP055047783, Retrieved from the Internet: URL:http://www.ieh.kit.edu/rd_download/ETG 2004_Kue_Lei.pdf [retrieved on 2012-12-13]
- Andreas Küchler ET AL: "Einfluss äußerer Grenzflächen auf die dielektrische Diagnose betriebsgealterter Hochspannungsdurchführungen", ETG-Fachtagung "Grenzflächen in elektrischen Isoliersystemen", 9 March 2005 (2005-03-09), XP055047793, Hanau Retrieved from the Internet: URL:http://www.alff-engineering.ch/PDF/31_ Kuechler.pdf [retrieved on 2012-12-13]

## Beschreibung

Die vorliegende Erfindung betrifft ein Verfahren zur Bestimmung eines Feuchtegehalts einer Isolierung eines Transformators und eine entsprechend ausgestaltete Vorrichtung.

In "Das dielektrische Verhalten von Öl-Papier-Isolationen unter der Wirkung von Grenzflächen-, Material- und Prüfparametern", A. Küchler u.a., Fachtagung der Energietechnischen Gesellschaft (ETG) 2005 in Hanau werden Polarisations- und Depolarisationsstrom-Messungen ausgewertet. In einem iterativen Prozess werden simulierte und gemessene Kurven zur Übereinstimmung gebracht, wobei beachtet wird, dass erhöhte Ströme sowohl von Feuchtigkeit als auch von Alterungsprodukten verursacht sein können.

In "Berücksichtigung geometrischer und parasitärer Einflüsse bei der Bestimmung des Wassergehalts in Öl-Papier-Isolationen durch die elektrische Diagnose", A. Küchler u.a., Fachtagung der Energietechnischen Gesellschaft (ETG), 1. Januar 2004 wird die Feuchte anhand von Gleichungen abhängig von der Leitfähigkeit des Pressboards und der Ölleitfähigkeit bestimmt. Dabei wird die Ölleitfähigkeit in einer separaten Messung bestimmt. Zur Modellierung der Isolierung werden in die Modelle Ersatzbilder eingesetzt, die die Materialien physikalisch korrekt beschreiben. Diese können ebenfalls aus Sprungantwort-Messungen abgeleitet werden.

In "Einfluss äußerer Grenzflächen auf die dielektrische Diagnose betriebsgealterter Hochspannungsdurchführungen", A. Küchler u.a. , Fachtagung der Energietechnischen Gesellschaft (ETG) 2005 in Hanau werden an den relevanten Isolationsmaterialien dielektrische Systemantworten bestimmt, um Ersatzbilder für die numerische Simulation von Durchführungen abzuleiten.

Feuchtigkeit insbesondere bei Öl-Papier-Isolierungen von Leistungstransformatoren verringert deren elektrische Festigkeit, beschleunigt ihre Alterung und kann zur Bildung von Gasblasen in der Isolierung führen. Unter dem Feuchtegehalt der Isolierung wird dabei ein prozentualer Wassergehalt in der Isolierung verstanden.

Eine Kenntnis des Feuchtegehalts in festen Bestandteilen der Isolierung, z.B. Papier oder Pressboard, ist von einer großen Wichtigkeit für einen sicheren Betrieb der Leistungstransformatoren. Zur Messung des Feuchtegehalts in den festen Bestandteilen der Isolierung sind dielektrische Messverfahren entwickelt worden, welche den Feuchtegehalt aus einer oder mehreren dielektrischen Eigenschaften der Isolierung ableiten. Diese Messung kann dabei im Zeit- oder Frequenzbereich erfolgen, wobei die dadurch entstehenden Ergebnisse Messgrößen bzw. dielektrische Eigenschaften, wie z.B. Polarisations- und Depolarisationsströme, der Verlustfaktor Tangens Delta, die Dielektrizitätskonstante, sind. Aus diesen Messgrößen kann dann durch einen Vergleich mit einem Modell der Feuchtegehalt in dem festen Bestandteil der Isolierung bzw. der festen Isolierung berechnet werden.

Problematisch ist, dass die dielektrischen. Eigenschaften der Isolierung nicht nur durch Wasser, sondern auch durch andere leitfähige Alterungsprodukte beeinflusst werden können, so dass durch diese Alterungsprodukte eine zusätzliche Feuchtigkeit vorgetäuscht werden kann. Daher ist typischerweise der gemessene oder analysierte Feuchtegehalt bzw. Wassergehalt gerade bei stark gealterten Transformatoren mit einem relativ hochleitfähigen Isoliersystem im Vergleich zu dem tatsächlichen Feuchtegehalt zu hoch. Diese Fehldiagnose aufgrund des fälschlicherweise zu hoch gemessenen Feuchtegehalts kann zu unnötigen Instandhaltungsmaßnahmen, wie z.B. einer Trocknung, führen.

Daher ist es die Aufgabe der vorliegenden Erfindung, ein Verfahren und eine Vorrichtung bereitzustellen, mit welchen ein Feuchtegehalt einer Isolierung eines Transformators genauer bestimmt werden kann, als es nach dem Stand der Technik möglich ist.

Diese Aufgabe wird erfindungsgemäß durch ein Verfahren zur Bestimmung eines Feuchtegehalts einer Isolierung eines Transformators nach Anspruch 1 und eine entsprechend ausgestaltete Vorrichtung nach Anspruch 10 gelöst. Die abhängigen Ansprüche definieren bevorzugte und vorteilhafte Ausführungsformen der Erfindung.

Im Rahmen der vorliegenden Erfindung wird ein Verfahren zur Bestimmung eines Feuchtegehalts einer Isolierung eines Transformators bereitgestellt, wobei die Isolierung eine Flüssigkeit, insbesondere Öl, umfasst. Das erfindungsgemäße Verfahren umfasst folgende Schritte:
- Bestimmen bzw. Messen einer oder mehrerer dielektrischer Eigenschaften der Isolierung.
- Ableiten eines vorläufigen Feuchtegehalts und einer Leitfähigkeit der Flüssigkeit aus einem Modell der Isolierung abhängig von der gemessenen dielektrischen Eigenschaft.
- Korrigieren des vorläufigen Feuchtegehalts mit Hilfe der Leitfähigkeit, um dadurch den Feuchtegehalt der Isolierung zu bestimmen.

Leitfähige Alterungsprodukte sind vor allem dissoziierte Säuren, welche sowohl in der Flüssigkeit (insbesondere Öl) gelöst als auch im festen Bestandteil der Isolierung (insbesondere Papier) angelagert sind. Durch thermodynamische Austauschprozesse entsteht ein Gleichgewicht der Verteilung der Alterungsprodukte zwischen der Flüssigkeit und den nicht flüssigen Bestandteilen bzw. dem festen Bestandteil der Isolierung. Die vorliegende Erfindung besteht nun darin, aus den alterungsbeeinflussten Eigenschaften der Flüssigkeit auf die alterungsbeeinflussten Eigenschaften der festen Bestandteile der Isolierung zu schließen. Dazu werden die dielektrischen Auswirkungen der Alterungsprodukte in der Isolierung durch eine Modellierung ermittelt, deren Ergebnis der unkorrigierte Feuchtegehalt und die Leitfähigkeit der Flüssigkeit ist. Über die Leitfähigkeit kann auf den Anteil der Alterungsprodukte im festen Bestandteil der Isolierung zurückgeschlossen werden. Anders ausgedrückt werden über die Kenntnis der leitfähigen Alterungsprodukte in der Flüssigkeit die leitfähigen Alterungsprodukte im festen Bestandteil der Isolierung und damit die Auswirkungen dieser Alterungsprodukte im festen Bestandteil der Isolierung bestimmt. Damit können die Auswirkungen der leitfähigen Alterungsprodukte im festen Bestandteil der Isolierung kompensiert werden, so dass das von der Leitfähigkeit der Alterungsprodukte im festen Bestandteil der Isolierung vorgetäuschte Wasser bei der Bestimmung des Feuchtegehalts der Isolierung berücksichtigt wird, wodurch die Bestimmung des Feuchtegehalts genauer ist als bei nach dem Stand der Technik bekannten Verfahren.

Durch eine genaue Bestimmung des Feuchtegehalts der Isolierung können unnötige Instandhaltungsmaßnahmen, wie z.B. eine Trocknung, und damit unnötige Stillstandszeiten von Transformatoren und letztendlich Kosten vermieden werden.

Die Kompensation der dielektrischen Eigenschaften der Alterungsprodukte in dem festen Bestandteil der Isolierung erfolgt dabei vorzugsweise durch eine Korrekturformel. Diese Korrekturformel wird dabei beispielsweise ermittelt, indem im Labor mehrere Isolierungen, welche mit unterschiedlich leitfähiger Flüssigkeit, insbesondere Öl, imprägniert sind, durchgemessen werden. Dabei ist zu berücksichtigen, dass durch eine Imprägnierung mit z.B. Öl unterschiedlicher Leitfähigkeit damit auch der scheinbare Feuchtegehalt der Isolierung verändert wird. Man erhält durch diese Labormessungen also einen Zusammenhang zwischen einem realen Feuchtegehalt der Isolierung zu einem modellierten Feuchtegehalt der Isolierung in Abhängigkeit der Leitfähigkeit.

Mit Hilfe dieses Zusammenhangs bzw. dieser Korrekturformel kann dann vorteilhafterweise für jeden gegebenen und aus dem Modell bestimmten Feuchtegehalt mit Hilfe der Leitfähigkeit der reale Feuchtegehalt bestimmt werden bzw. der aus dem Modell bestimmte Feuchtegehalt entsprechend korrigiert werden.

Bei einer bevorzugten Ausführungsform ist die Isolierung eine Öl-Papier-Isolierung, so dass es sich bei der Flüssigkeit um Öl handelt.

Bei dieser Ausführungsform werden die dielektrischen Wirkungen der Alterungsprodukte im Öl durch die Modellierung ermittelt, wobei sich als Ergebnis eine Ölleitfähigkeit ergibt. Diese Ölleitfähigkeit ermöglicht nun einen Rückschluss auf den Anteil der Alterungsprodukte im Papier, welche durch ihre Leitfähigkeit Wasser vortäuschen. Über die Kenntnis der leitfähigen Alterungsprodukte im Öl wird dann die Wirkung der leitfähigen Alterungsprodukte im Papier bzw. Pressboard kompensiert.

Ein Modell der Isolierung wird derart bestimmt, dass mindestens eine gemessene dielektrische Eigenschaft der Isolierung mit diesem Modell besser übereinstimmt als mit anderen Modellen. Dazu werden Parameter des Modells, nämlich der Feuchtegehalt der Isolierung und die Leitfähigkeit der Flüssigkeit, derart optimiert, so dass die aus dem Modell abgeleitete mindestens eine dielektrische Eigenschaft optimal mit der gemessenen mindestens einen dielektrischen Eigenschaft übereinstimmt. Mit anderen Worten wird das Modell der Isolierung mit der besten Übereinstimmung bezüglich der mindestens einen gemessenen dielektrischen Eigenschaft der Isolierung ermittelt. Aus diesem derart ermittelten Modell werden dann der vorläufige Feuchtegehalt und die Leitfähigkeit (zur Korrektur des Feuchtegehalts) abgeleitet.

Indem das Modell gewählt wird, aus welchem die mindestens eine gemessene dielektrische Eigenschaft der Isolierung, z.B. Polarisations- und Depolarisationsströme der Isolierung, der Verlustfaktor Tangens Delta oder die Dielektrizitätskonstante der Isolierung, am besten hervorgehen, kann aus diesem Modell vorteilhafterweise auch der vorläufige bzw. unkorrigierte Feuchtegehalt und die Leitfähigkeit am besten abgeleitet werden, wodurch dann in einem weiteren Schritt mittels der Leitfähigkeit der korrekte Feuchtegehalt der Isolierung am besten ermittelt werden kann.

Das Modell berücksichtigt dabei vorteilhafterweise eine Temperatur der Isolierung, welche im Wesentlichen einer Temperatur des Transformators entspricht.

Bei einer erfindungsgemäßen Ausführungsform umfasst das Modell ein X-Y-Modell für mehrschichtige Isolierungen, im vorliegenden Fall insbesondere Öl-Papier-Isolierungen, wobei es sich beispielsweise um das aus U. Gafvert, G. Frimpong, und J. Fuhr: "Modelling of dielectric measurements on power transformers", Proc. 37th Session "Large High Voltage Electric Systems" (CIGRE), paper 103, Paris, France, 1998 bekannte X-Y-Modell handeln kann.

Das erfindungsgemäße Verfahren wird vorzugsweise zur Bestimmung eines Feuchtegehalts eines Leistungstransformators oder eines Hochspannungstransformators durchgeführt. Dabei wird unter einem Leistungstransformator ein Transformator verstanden, welcher zur Übertragung von elektrischer Leistung beispielsweise über Hochspannungsleitungen eingesetzt wird. Eine Hochspannung ist in diesem Fall eine Spannung von 1000 V oder mehr. Bei einem Hochspan-nungstransformator weist demnach zumindest die primäre oder die sekundäre Seite eine Hochspannung auf.

Die Kompensation der Auswirkungen der leitfähigen Alterungsprodukte im festen Bestandteil der Isolierung erfolgt dabei in der Regel software-basiert, so dass beispielsweise ein Erstellen von mehreren Vergleichsdatensätzen für unterschiedlich gealterte Isolierungen nicht benötigt wird.

Im Rahmen der vorliegenden Erfindung wird auch eine Vorrichtung zur Bestimmung eines Feuchtegehalts einer Isolierung eines Transformators bereitgestellt, wobei die Isolierung eine Flüssigkeit aufweist. Die Vorrichtung umfasst dabei eine Messvorrichtung, um eine dielektrische Eigenschaft der Isolierung zu messen, und eine Verarbeitungseinheit. Die Verarbeitungseinheit ist in der Lage, einen vorläufigen Feuchtegehalt der Isolierung und eine Ölleitfähigkeit der Flüssigkeit aus einem zuvor erstellten Modell der Isolierung abzuleiten und den vorläufigen Feuchtegehalt der Isolierung mit Hilfe der Leitfähigkeit zu korrigieren, um dadurch den Feuchtegehalt der Isolierung zu bestimmen.

Die Vorteile der erfindungsgemäßen Vorrichtung zur Bestimmung des Feuchtegehalts der Isolierung entsprechen im Wesentlichen den vorab erwähnten Vorteilen des erfindungsgemäßen Verfahrens zur Bestimmung des Feuchtegehalts der Isolierung, weshalb sie hier nicht wiederholt werden.

Mit der vorliegenden Erfindung kann insbesondere der Feuchtegehalt der Isolierung eines Transformators genau bestimmt werden. Selbstverständlich ist die vorliegende Erfindung jedoch nicht auf diesen bevorzugten Anwendungsbereich beschränkt, sondern die vorliegende Erfindung kann auch zur Bestimmung des Feuchtegehalts anderer Gegenstände eingesetzt werden, welche eine Flüssigkeit und einen festen Bestandteil umfassen, wobei thermodynamische Austauschprozesse für eine gleichgewichtige Verteilung von Alterungsprodukte zwischen der Flüssigkeit und dem festen Bestandteil sorgen. Ein Beispiel für solch einen Gegenstand ist eine Isolierung, welche bei anderen elektrotechnischen Hochspannungsvorrichtungen, wie z.B. Hochspannungsschaltern, eingesetzt wird.

Im Folgenden wird die vorliegende Erfindung näher durch ein Ausführungsbeispiel unter Bezugnahme auf die beiliegende Zeichnung erläutert.

Fig. 1 stellt ein Ablaufdiagramm für eine erfindungsgemäße Ausführungsform eines Verfahrens zur Bestimmung eines Feuchtegehalts einer Isolierung eines Transformators dar.

Fig. 2 stellt schematisch einen Hochspannungstransformator dar, bei dessen Isolierung das erfindungsgemäße Verfahren eingesetzt werden kann.

Fig. 3 stellt schematisch eine erfindungsgemäße Vorrichtung zur Bestimmung eines Feuchtegehalts einer Isolierung eines Transformators dar.

Im Schritt 1 werden dielektrische Eigenschaften einer Isolierung eines Transformators und die Temperatur der Isolierung abhängig von einer Frequenz f einer an den Transformator angelegten Spannung gemessen. Die dielektrischen Eigenschaften der Isolierung entsprechen dabei den dielektrischen Eigenschaften des Transformators und sind dielektrische Eigenschaften, welche auch eine Kapazität des Transformators *C_{Tr}*(*f*) aufweist. Diese dielektrischen Eigenschaften umfassen Polarisationsströme, Depolarisationsströme, den Verlustfaktor Tangens Delta und die Dielektrizitätskonstante.

Im Schritt 2 werden unterschiedliche dielektrische Antworten von Pressboard und Papier (d.h. von dem festen Bestandteil der Isolierung) *ε_{PB}*(*f*) in Abhängigkeit von der Temperatur und von einem Feuchtegehalt des Pressboards und Papiers sowie ebenfalls der Frequenz f der an dem Transformator angelegten Spannung als eine Datenbasis als Basis eines Modells der Isolierung bereitgestellt.

Im Schritt 3 wird eine Formel in das Verfahren eingeführt, mit welcher dielektrische Antworten bzw. dielektrische Eigenschaften eines Isolieröls ε*_{Oil}*(*f*) abhängig von der Leitfähigkeit σ_{Oil} des Öls, der Frequenz f der an den Transformator angelegten Spannung und der Permittivität des Vakuums ε₀ bestimmt werden können.

Im Schritt 5 werden die dielektrischen Antworten von Pressboard und Papier und des Öls über ein mathematisches X-Y-Modell miteinander kombiniert. Dabei steht X für einen Anteil von Isolierbarrieren in der Isolierung und Y steht für einen Anteil von Abstandshaltern in der Isolierung. Mit dem X-Y-Modell wird also ein Verhältnis von flüssiger Isolierung (Öl) zur festen Isolierung (Pressboard, Papier in Barrieren und Abstandshaltern) widergespiegelt. Dabei wird die Temperatur T des Transformators über einen Schritt 4 berücksichtigt. Das Ergebnis ist eine dielektrische Antwort des Modells *εₘ*(*f*)*.*

Mit Hilfe der geometrischen Kapazität C₀ wird dann im Schritt 6 eine Modellkapazität *Cₘ*(*f*) berechnet.

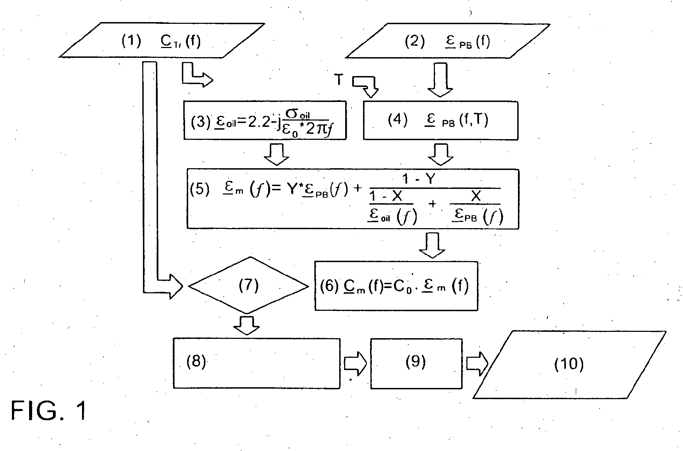

Durch einen Fitting-Algorithmus oder einen Optimierungsalgorithmus werden die Parameter Feuchtegehalt des Pressboards und des Papiers und die Leitfähigkeit σ_{Oil} des Öls derart optimiert, dass die dielektrischen Eigenschaften der Kapazität des realen Transformators *C_{Tr}*(*f*) (d.h. die in Schritt 1 gemessenen dielektrischen Eigenschaften) mit den dielektrischen Eigenschaften der modellierten Kapazität *Cₘ*(*f*) bzw. mit den dielektrischen Eigenschaften des Modells am besten übereinstimmen. Mit anderen Worten werden die Modelleigenschaften der modellierten Kapazität *Cₘ*(*f*) an die Eigenschaften des realen Transformators angepasst, indem die Parameter des Modells (Feuchtegehalt und Leitfähigkeit σ_{Oil}) variiert werden. Dies wird in Fig. 1 schematisch durch einen Vergleichsschritt 7 dargestellt, in welchem die dielektrischen Eigenschaften des Transformators *C_{Tr}*(*f*) mit denjenigen des Modells *Cₘ*(*f*) verglichen werden. Die Eigenschaften des optimal passenden Modells bzw. des Modells, welches die beste Übereinstimmung mit dem realen Transformator liefert, werden als Eigenschaften der realen Isolierung des Transformators betrachtet.

Als Ergebnis werden aus dem Modell dann die Leitfähigkeit des Öls σ_{Oil} wie auch ein noch unkorrigierter Wassergehalt bzw. Feuchtegehalt im Pressboard und Papier ermittelt, siehe Schritt 8. Der Feuchtegehalt ist dabei gerade bei hohen Ölleitfähigkeiten zu hoch. Hohe Ölleitfähigkeiten treten gerade bei stark gealterten Transformatoren auf, so dass hier der unkorrigierte Feuchtegehalt höher als der reale Feuchtegehalt des Pressboards und Papiers ist.

Mit Kenntnis der Leitfähigkeit des Öls wird nun in Schritt 9 die Wirkung von leitfähigen Alterungsprodukten im Pressboard und Papier kompensiert. Die Ölleitfähigkeit ermöglicht einen Rückschluss auf den Anteil der Alterungsprodukte im Pressboard und Papier, welche durch ihre Leitfähigkeit Wasser vortäuschen. Dieser Rückschluss ist möglich, da das Papier und Pressboard mit demselben Öl imprägniert ist, für welches die Ölleitfähigkeit durch die Modellierung ermittelt wurde.

Im Schritt 10 werden dann der korrigierte Feuchtegehalt im Papier und Pressboards, also der Feuchtegehalt der Isolierung, sowie die Ölleitfähigkeit ausgegeben.

Die im Schritt 9 durchgeführte Kompensation beruht auf einer Korrekturformel, durch welche der modellierte, zu hohe Wassergehalt auf den richtigen Wert korrigiert wird. Die Korrekturformel wird dabei durch Messungen an Papierisolierungen gewonnen, welche mit unterschiedlich leitfähigem Öl imprägniert werden. Mit anderen Worten wird das oben beschriebene Verfahren (Schritte 1 bis 8) für mehrere Papierisolierungen durchgeführt, wobei das Öl, mit welchem diese Papierisolierungen imprägniert sind, und damit der reale Feuchtegehalt der Papierisolierung bekannt ist. Aus dem realen Feuchtegehalt, dem durch das Modell ermittelten unkorrigierten Feuchtegehalt und der Leitfähigkeit lässt sich dann die Korrekturformel erstellen, mit welcher erfindungsgemäß aus dem unkorrigierten Feuchtegehalt (Ergebnis des Schritts 8) der korrekte bzw. reale Feuchtegehalt der Isolierung bestimmt wird.

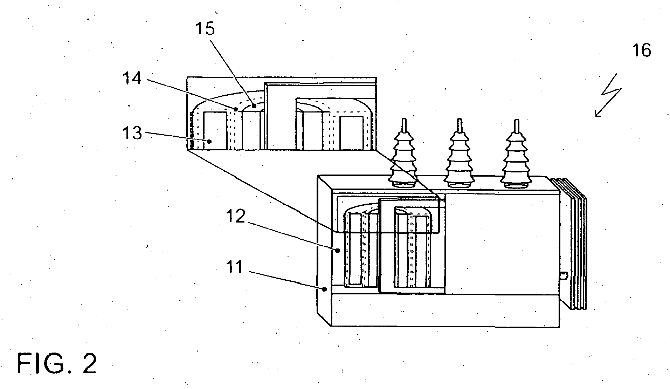

In Fig. 2 ist ein Öl-Papier-isolierter Transformator 16 dargestellt. Ein Kessel 11 des Transformators 16 ist mit Isolieröl 12 gefüllt. Zwischen einer Oberspannungswicklung 13 und einer Unterspannungswicklung 15 des Transformators 16 befindet sich ein fester Bestandteil 14 einer Isolierung des Transformators 16. Die Isolierung besteht demnach aus Pressboard und Papier 14 und dem eingefüllten Isolieröl 12, wobei der Feuchtegehalt der Isolierung mit dem vorab diskutierten erfindungsgemäßen Verfahren genau bestimmt werden kann.

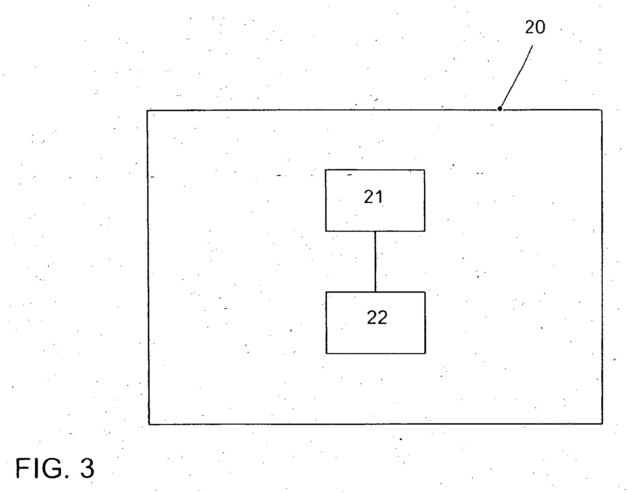

In Fig. 3 ist schematisch eine erfindungsgemäße Vorrichtung 20 zur Bestimmung des Feuchtegehalts der Isolierung 12, 14 des Transformators 16 dargestellt. Die Vorrichtung 20 umfasst eine Messvorrichtung 21 zur Messung einer Temperatur T des Transformators und deren Isolierung und zur Messung dielektrischer Eigenschaften des die Isolierung bildenden Dielektrikums, welches aus dem Isolieröl 12 und dem Papier und Pressbord 14 besteht. Darüber hinaus umfasst die Vorrichtung 10 einen Prozessor 22, welcher aus den dielektrischen Eigenschaften der Isolierung 12, 14 und der Leitfähigkeit des Isolieröls 12 durch das vorab skizzierte Verfahren den Feuchtegehalt der Isolierung, insbesondere des Papiers und Pressboards 14, berechnet.

## Patentansprüche

1. Verfahren zur Bestimmung eines Feuchtegehalts einer Isolierung (12, 14) eines Transformators,
wobei das Verfahren folgende Schritte umfasst:
- Messen (1) mindestens einer dielektrischen Eigenschaft (*C_{Tr}*(*f*)) der Isolierung (12, 14),
- Ableiten (8) eines unkorrigierten Feuchtegehalts der Isolierung (12, 14) und einer Leitfähigkeit (σ_{Oil}) einer in der Isolierung (12, 14) enthaltenen Flüssigkeit (12) aus einem Modell (*Cₘ*(*f*)) der Isolierung, indem der unkorrigierte Feuchtegehalt der Isolierung (12, 14) und die Leitfähigkeit (σ_{Oil}) der Flüssigkeit (12) als Parameter des Modells (*Cₘ*(*f*)) derart gewählt werden, dass die aus dem Modell (*Cₘ*(*f*)) abgeleitete mindestens eine dielektrische Eigenschaft optimal mit der gemessenen mindestens einen dielektrischen Eigenschaft (*C_{Tr}*(*f*)) der Isolierung (12, 14) übereinstimmt, und
- Korrigieren (9) des unkorrigierten Feuchtegehalts der Isolierung (12, 14) mittels der Leitfähigkeit (σ_{Oil}), um den Feuchtegehalt der Isolierung (12, 14) zu bestimmen.

2. Verfahren nach Anspruch 1,
**dadurch gekennzeichnet,**
**dass** die Korrektur (9) mit einer Korrekturformel erfolgt, welche durch Messungen an Isolierungen (14) gewonnen wird, welche mit Flüssigkeiten (12) unterschiedlicher Leitfähigkeit (σ_{Oil}) imprägniert werden.

3. Verfahren nach Anspruch 1 oder 2,
**dadurch gekennzeichnet,**
**dass** die Isolierung eine Öl-Papier-Isolierung (12, 14) ist, und
**dass** die Flüssigkeit Öl (12) ist.

4. Verfahren nach einem der vorhergehenden Ansprüche,
**dadurch gekennzeichnet,**
**dass** das Modell (*Cₘ*(*f*)) eine Temperatur (T) der Isolierung (12, 14) berücksichtigt.

5. Verfahren nach einem der vorhergehenden Ansprüche,
**dadurch gekennzeichnet,**
**dass** das Modell (*Cₘ*(*f*)) der Isolierung (12, 14) mittels eines X-Y-Modells (5) für mehrschichtige Isolierungen erstellt wird.

6. Verfahren nach einem der vorhergehenden Ansprüche,
**dadurch gekennzeichnet,**
**dass** das Verfahren zur Bestimmung eines Feuchtegehalts eines Hochspannungstransformators (16) durchgeführt wird.

7. Verfahren nach einem der vorhergehenden Ansprüche,
**dadurch gekennzeichnet,**
**dass** das Modell (*Cₘ*(*f*)) automatisch abhängig von der mindestens einen gemessenen dielektrischen Eigenschaft der Isolierung (12, 14) erstellt wird.

8. Vorrichtung zur Bestimmung eines Feuchtegehalts einer Isolierung (12, 14) eines Transformators (16),
wobei die Vorrichtung (10) eine Messvorrichtung (21) zur Messung (1) von mindestens einer dielektrischen Eigenschaft der Isolierung (2, 5) und eine Verarbeitungseinheit (22) umfasst,
wobei die Verarbeitungseinheit (22) derart ausgestaltet ist, dass die Verarbeitungseinheit (22) einen unkorrigierten Feuchtegehalt der Isolierung (12, 14) und eine Leitfähigkeit (σ_{Oil}) einer in der Isolierung (12, 14) enthaltenen Flüssigkeit (12) aus einem Modell (*Cₘ*(*f*)) ableitet (8), indem die Verarbeitungseinheit (22) den unkorrigierten Feuchtegehalt der Isolierung (12, 14) und die Leitfähigkeit (σ_{Oil}) der Flüssigkeit (12) als Parameter des Modells (*Cₘ*(*f*)) derart wählt, dass die aus dem Modell (*Cₘ*(*f*)) abgeleitete mindestens eine dielektrische Eigenschaft optimal mit der gemessenen mindestens einen dielektrischen Eigenschaft (*Cₘ*(*f*)) der Isolierung (12, 14) übereinstimmt, und
wobei die Verarbeitungseinheit (22) derart ausgestaltet ist, dass die Verarbeitungseinheit (22) den unkorrigierten Feuchtegehalt der Isolierung (12, 14) mittels der Leitfähigkeit (σ_{Oil}) korrigiert (9), um den Feuchtegehalt der Isolierung (12, 14) zu bestimmen.

9. Vorrichtung nach Anspruch 10,
**dadurch gekennzeichnet,**
**dass** die Vorrichtung (10) zur Durchführung des Verfahrens nach einem der Ansprüche 1-7 ausgestaltet ist.

## Claims

1. A method for determining a humidity content of an insulation (12, 14) of a transformer,
the method comprising the following steps:
- measuring (1) at least one dielectric property (*C_{Tr}*(*f*)) *of* the insulation (12, 14),
- deriving (8) an uncorrected humidity content of the insulation (12, 14) and a conductivity (σ_{Oil}) of a liquid (12) which is included in the insulation (12, 14) from a model (*Cₘ*(*f*)) of the insulation by choosing the uncorrected humidity content of the insulation (12, 14) and the conductivity (σ_{Oil}) of the liquid (12) as parameters of the model (*Cₘ*(*f*)) such that the at least one dielectric property derived from the model (*Cₘ*(*f*)) optimally corresponds to the at least one measured dielectric property (*C_{Tr}*(*f*)) of the insulation (12, 14), and
- correcting (9) the uncorrected humidity content of the insulation (12, 14) by means of the conductivity (σ_{Oil}) to determine the humidity content of the insulation (12, 14).

2. The method according to claim 1,
**characterized in that**
the correcting (9) is done using a correction formula, which is obtained by measurements on insulations (4) which are impregnated with liquids (12) of different conductivity (σ_{Oil}).

3. The method according to claim 1 or claim 2,
**characterized in that**
the insulation is an oil-paper insulation (12, 14), and the liquid (12) is oil.

4. The method according to any one of the preceding claims,
**characterized in that**
the model (*Cₘ*(*f*)) takes account of a temperature (T) of the insulation (12, 14).

5. The method according to any one of the preceding claims,
**characterized in that**
the model (*Cₘ*(*f*)) of the insulation (12, 14) is created by means of an X-Y model (5) for multi-layer insulations.

6. The method according to any one of the preceding claims,
**characterized in that**
the method is carried out to determine a humidity content of a high voltage transformer (16).

7. The method according to any one of the preceding claims,
**characterized in that**
the model (*Cₘ*(*f*)) is created automatically depending on the at least one measured dielectric property of the insulation (12, 14).

8. An apparatus for determining a humidity content of an insulation (12, 14) of a transformer (16),
the apparatus (10) comprising a measuring device (21) for measuring at least one dielectric property of the insulation (12, 14) and a processing unit (22),
wherein the processing unit (22) is designed such the processing unit (22) derives (8) an uncorrected humidity content of the insulation (12, 14) and a conductivity (σ_{Oil}) of a liquid (12) which is included in the insulation (12, 14) from a model (*Cₘ*(*f*)) by the processing unit (22) choosing the uncorrected humidity content of the insulation (12, 14) and the conductivity (σ_{Oil}) of the liquid (12) as parameters of the model (*Cₘ*(*f*)) such that the at least one dielectric property derived from the model (*Cₘ*(*f*)) optimally corresponds to the at least one measured dielectric property (*Cₘ*(*f*)) of the insulation (12, 14), and
wherein the processing unit (22) is designed such that the processing unit (22) corrects (9) the uncorrected humidity content of the insulation (12, 14) by means of the conductivity (σ_{Oil}) to determine the humidity content of the insulation (12, 14).

9. The apparatus according to claim 8,
**characterized in that**
the apparatus (10) is designed to carry out the method according to any one of claims 1-7.

## Revendications

1. Procédé servant à déterminer une teneur en humidité d'une isolation (12, 14) d'un transformateur,
sachant que le procédé comprend les étapes qui suivent consistant à :
- mesurer (1) au moins une propriété diélectrique (C_{Tr}(f)) de l'isolation (12, 14) ;
- déduire (8) une teneur en humidité non corrigée de l'isolation (12, 14) et une conductivité (σ_{Oil}) d'un liquide (12) contenu dans l'isolation (12, 14) à partir d'un modèle (Cₘ(f)) de l'isolation en choisissant la teneur en humidité non corrigée de l'isolation (12, 14) et la conductivité (σ_{Oil}) du liquide (12) en tant que paramètres du modèle (Cₘ(f)) de telle manière que la propriété diélectrique au moins au nombre de une déduite du modèle (Cₘ(f)) coïncide de manière optimale avec la propriété diélectrique (C_{Tr}(f)) mesurée au moins au nombre de une de l'isolation (12, 14) ; et
- corriger (9) la teneur en humidité non corrigée de l'isolation (12, 14) au moyen de la conductivité (σ_{Oil}) afin de déterminer la teneur en humidité de l'isolation (12, 14).

2. Procédé selon la revendication 1,
**caractérisé en ce**
**que** la correction (9) est effectuée avec une formule de correction, qui est obtenue par des mesures sur des isolations (14) qui sont imprégnées de liquides (12) présentant diverses conductivités (σ_{Oil}).

3. Procédé selon la revendication 1 ou 2,
**caractérisé en ce**
**que** l'isolation est une isolation papier huile (12, 14), et
en ce que le liquide est de l'huile (12).

4. Procédé selon l'une quelconque des revendications précédentes,
**caractérisé en ce**
**que** le modèle (Cₘ(f)) tient compte d'une température (T) de l'isolation (12, 14).

5. Procédé selon l'une quelconque des revendications précédentes,
**caractérisé en ce**
**que** le modèle (Cₘ(f)) de l'isolation (12, 14) est élaboré au moyen d'un modèle X-Y (5) pour des isolations multicouches.

6. Procédé selon l'une quelconque des revendications précédentes,
**caractérisé en ce**
**que** le procédé est mis en oeuvre aux fins de la détermination d'une teneur en humidité d'un transformateur à haute tension (16).

7. Procédé selon l'une quelconque des revendications précédentes,
**caractérisé en ce**
**que** le modèle (Cₘ(f)) est élaboré automatiquement en fonction de la propriété diélectrique mesurée au moins au nombre de une de l'isolation (12, 14).

8. Dispositif servant à déterminer une teneur en humidité d'une isolation (12, 14) d'un transformateur (16),
sachant que le dispositif (10) présente un dispositif de mesure (21) servant à mesurer (1) la propriété diélectrique au moins au nombre de une de l'isolation (2, 5) et une unité de traitement (22),
sachant que l'unité de traitement (22) est configurée de telle manière que l'unité de traitement (22) déduit (8) d'un modèle (Cₘ(f)) une teneur en humidité non corrigée de l'isolation (12, 14) et un conductivité (σ_{Oil}) d'un liquide (12) contenu dans l'isolation (12, 14) en ce que l'unité de traitement (22) choisit la teneur en humidité non corrigée de l'isolation (12, 14) et la conductivité (σ_{Oil}) du liquide (12) comme paramètres du modèle (Cₘ(f)) de telle manière que la propriété diélectrique au moins au nombre de une déduite du modèle (Cₘ(f)) coïncide de manière optimale avec la propriété diélectrique (Cₘ(f)) mesurée au moins au nombre de une de l'isolation (12, 14), et
sachant que l'unité de traitement (22) est configurée de telle manière que l'unité de traitement (22) corrige (9) la teneur en humidité non corrigée de l'isolation (12, 14) au moyen de la conductivité (σ_{Oil}) afin de déterminer la teneur en humidité de l'isolation (12, 14).

9. Dispositif selon la revendication 10,
**caractérisé en ce**
**que** le dispositif (10) est configuré aux fins de la mise en oeuvre du procédé selon l'une quelconque des revendications 1 à 7.
